Europäisches Patentamt

European Patent Office

Office européen des brevets

(19)

(11) Veröffentlichungsnummer: **0 378 607 B1**

# (12) EUROPÄISCHE PATENTSCHRIFT

(45) Veröffentlichungstag der Patentschrift:
11.12.91 Patentblatt 91/50

(51) Int. Cl.⁵: **B62D 55/108, F16F 1/14**

(21) Anmeldenummer: **89906049.5**

(22) Anmeldetag: **02.06.89**

(86) Internationale Anmeldenummer:
**PCT/DE89/00364**

(87) Internationale Veröffentlichungsnummer:
**WO 89/11993 14.12.89 Gazette 89/29**

(54) **TORSIONSFEDER.**

(30) Priorität: 04.06.88 DE 3819162

(43) Veröffentlichungstag der Anmeldung:
25.07.90 Patentblatt 90/30

(45) Bekanntmachung des Hinweises auf die
Patenterteilung:
11.12.91 Patentblatt 91/50

(84) Benannte Vertragsstaaten:
**CH DE FR GB LI SE**

(56) Entgegenhaltungen:
**EP-A- 0 097 540**
**DE-C- 1 000 643**
**US-A- 2 942 871**

(73) Patentinhaber: **IBP Pietzsch GmbH**
**Hertzstrasse 32-34**
**W-7505 Ettlingen (DE)**

(72) Erfinder: **SCHRÖDER, Bernd**
**Lindenweg 5b**
**W-7555 Bietigheim (DE)**
Erfinder: **HARTMANN, Rudolf**
**Finkenweg 8**
**W-7516 Karlsbad-Auerbach (DE)**
Erfinder: **THATE, Helmut**
**Am Bürgergarten 2**
**W-6730 Neustadt 13 (DE)**

(74) Vertreter: **Geitz, Heinrich, Dr.-Ing.**
**Postfach 2708 Kaiserstrasse 156**
**W-7500 Karlsruhe 1 (DE)**

## Beschreibung

Die Erfindung bezieht sich gemäß Oberbegriff des Patentanspruchs 1 auf eine Torsionsfeder zum beidendig drehfesten Verbinden mit gegeneinander verdrehbaren Bauteilen, bei der wenigstens zwei koaxial zueinander angeordnete dünnwandige Rohrabschnitte einander mit Spiel konzentrisch umschließen, die an ihren einen Enden drehfest miteinander verbunden und dadurch als Drehfeder in Reihe geschaltet, hingegen an den anderen Enden jeweils mit Mitteln zum drehfesten Anschluß an die gegeneinander verdrehbaren Bauteile versehen sind. Insbesondere bezieht sich die Erfindung auf eine Drehstabfeder für einen in einem fahrzeugfesten Lager schwenkbar gelagerten Lenker zum Führen eines Fahrzeugrades bzw. einer Gleisketten-Laufrolle an seinem von dem Lager entfernten Ende.

Aus der DE-B-1 010 332 ist eine Drehstabfeder der im Oberbegriff des Patentanspruchs 1 angegebenen Art und Zweckbestimmung bekannt, bei der dei jeweils einen Enden von zwei einander mit Spiel konzentrisch umschließenden Rohrabschnitten starr miteinander verbunden sind. Bei dieser Drehstabfeder haben die stirnendigen Verbindungsbereiche erhebliche Axialerstrekkungen und bestehen aus zwischen den Rohrabschnitten eingeschweißten Ringen. Notwendig führt diese Ausbildung der Verbindungsbereiche zur Reduzierung der als Drehstabfeder verfügbaren Länge der jeweiligen Rohrabschnitte bzw. zu einer Vergrößerung der Baulänge der Torsionsfeder.

Bei der Verwendung derartiger Torsionsfedern zum Abfedern von an Lenkern geführten Fahrzeugrädern oder Gleisketten-Laufrollen kommt der Baulänge insofern besondere Bedeutung zu, als derartige Torsionsfedern innerhalb der Spurbreite der Fahrzeuge untergebracht werden müssen.

Demgemäß besteht die der Erfindung zugrundeliegende Aufgabe in der Schaffung einer verbesserten Torsionsfeder, die im Vergleich zu der vorbekannten Drehfeder größere Drehwinkel bei beschränkter Baulänge und beschränktem Gewicht ermöglicht und darüber hinaus in einfacher Weise herstell- und einbaubar sein soll.

Gelöst ist diese Aufgabe dadurch, daß bei der im Oberbegriff des Patentanspruchs 1 angegebenen Torsionsfeder die Rohrabschnitte einstückig ausgebildet sind und daß der Übergang von dem einen Rohrabschnitt zum anderen Rohrabschnitt in einem Umlenkbereich im wesentlichen querschnittsgleich mit den ineinander übergehenden Rohrabschnitten kontinuierlich verläuft.

Im Gegensatz zu der vorbekannten Torsionsfeder, bei der die beiden einander mit Spiel konzentrisch umschließenden Rohrabschnitte mittels eines an einem Ende eingesetzten und mit beiden Rohrabschnitten verschweißten Ringes miteinander verbunden sind, handelt es sich bei der Erfindung um eine einstückige Ausbildung der Rohrabschnitte, die angesichts des im wesentlichen querschnittsgleichen Übergangs im Umlenkbereich ohne Sprünge im Steifigkeitsverhalten als Drehfedern hintereinander geschaltet sind. Dies ermöglicht die Ausnutzung der gesamten Länge der Rohrabschnitte als Drehfedern und folglich weist bei gleichen Drehwinkeln die erfindungsgemäße Torsionsfeder eine kleinere Baulänge und auch geringeres Gewicht auf als vorbekannte Torsionsfedern.

Ein wichtiges Ausgestaltungsmerkmal sieht vor, daß die als Drehfedern in Reihe geschalteten Rohrabschnitte aus faserverstärktem Kunststoff bestehen. Dabei können zweckmäßigerweise die Rohrschnitte als weiche Drehfeder mit in einem Winkel von etwa 45° gegenüber der Rohrlängsachse verlaufenden Fasereinlagen ausgebildet sein. Insbesondere können die Rohrabschnitte aus glasfaserverstärktem Kunststoff bestehen.

Faserverbundstoffe, die als solche bekannt sind, zeichnen sich gegenüber Stahl durch niedriges Gewicht und große Arbeitsaufnahmefähigkeit aus. Angesichts des kleinen Elastizitäts-Moduls derartiger Werkstoffe sind durch die Hintereinanderschaltung von wenigstens zwei einander mit Spiel konzentrisch umschließenden Drehrohren vergleichsweise große Federwege realisiert. Insbesondere gilt dies, wenn die Fasereinlagen gemäß der vorerwähnten Weiterbildung der erläuterten Ausgestaltung unter einem Winkel von etwa 45° gegenüber der Drehfederlängsachse gewickelt sind.

Aus Faserverbundstoffen bestehende Drehfedern haben zwar im Vergleich zu Konstruktionslösungen aus Stahl bei gleicher Arbeitsaufnahme ein um etwa 40% größeres Volumen, aber angesichts der geringeren Dichte und des wesentlich kleineren Gleitmoduls liegt das Gewicht von Federn aus Faserverbundstoffen nur bei etwa einem Drittel von Stahlkonstruktionen. Dadurch ist der Vorteil von Stahl°Torsionsfedern in Bezug auf die maximal zulässigen Schubspannungen mehr als kompensiert. Darüber hinaus sind gewichtsparende Drehrohre aus Faserverbundstoffen leicht herstellbar.

Bei der erfindungsgemäß einstückigen Ausbildung der Rohrabschnitte hat es sich im Interesse eines kontinuierlichen Übergangs von einem Rohrabschnitt zum jeweils anderen Rohrabschnitt als vorteilhaft erwiesen, wenn die verstärkenden Fasern im Umlenkbereich von dem einen Rohrabschnitt zum anderen Rohrabschnitt durchlaufend ausgebildet sind. Zweckmäßigerweise . können dabei die verstärkenden Fasern über dem jeweiligen Rohrabschnitt schraubengangartig verlaufen und das Vorzeichen der Schraubenrichtung kann sich beim Übergang von dem einen in den anderen Rohrabschnitt im Umlenkbereich umkehren.

Naturgemäß haben einander konzentrisch mit Spiel umschließende Rohrabschnitte unterschiedliche Durchmesser. Unbeschadet dieser unterschiedlichen Durchmesser sieht eine Weiterbildung der Erfindung vor, daß die inneren und äußeren Rohrschnitte unterschiedliche Wandstärken, jedoch etwa gleiche Torsionswiderstandsmomente haben.

Bei einer anderen erfindungsgemäßen Ausgestaltung besteht die Torsionsfeder aus wenigstens zwei einander konzentrisch umschließenden, jeweils spiralförmig gewickelten Faserschichten. Bei einem derartigen Aufbau der erfindungsgemäßen Torsionsfeder hat es sich als äußerst vorteilhaft erwiesen, wenn jede Faserschicht aus mehreren vorfabrizierten schraubengangartigen Sektorstreifen mit jeweils einem über den Umlenkabschnitt miteinander verbundenen Innen- und Außenteil besteht, welche Sektorstreifen einander zu einem jeweils den inneren und äußeren Rohrabschnitt einer Faserschicht bildenden Zylinder ergänzen.

Die Breite des Innen- und Außenteils eines jeden Sektorstreifens sollte dabei über dessen axialer Länge gleichbleibend sein, wobei aber die Außenteile der schraubengangartigen Sektorstreifen größere Breite als die Innenteile und darüber hinaus geringere Dicke haben können. Die verstärkenden Fasern in den schraubengangartig ausgebildeten Sektorstreifen sollten vorzugsweise parallel zueinander und parallel zu den Außenkanten der jeweiligen Innen- und Außenteile verlaufen.

Bei der aus wenigstens zwei einander konzentrisch umschließenden, jeweils spiralförmig gewickelten Faserschichten aufgebauten Torsionsfeder hat es sich als besonders zweckmäßig erwiesen, wenn die einander umschließenden Faserschichten jeweils im entgegengesetzten Drehsinne gewickelt sind und-/oder unterschiedliche Wicklungsdichte aufweisen. Eine derartige Ausbildung führt im Belastungsfalle zu einer vorteilhaften Ausgestaltung der benachbarten Faserschichten aneinander und durch unterschiedliche Wicklungsdichte gelingt es, die Torsionsfeder mit einer Vorzugsrichtung für die Belastung auszustatten.

Für bestimmte Bedarfsfälle kann es auch vorteilhaft sein, wenn die Innen- und Außenteile der Sektorstreifen bei der Bildung der inneren und äußeren Rohrabschnitte mit unterschiedlichen Schraubenwinkeln gewickelt sind.

Neben dem kontinuierlichen Übergang von einem inneren Rohrabschnitt zu einem äußeren Rohrabschnitt in dem erwähnten Umlenkbereich ist es auch vorteilhaft, wenn die vom Umlenkbereich entfernten Enden der Torsionsfeder in einem nur geringe Axialerstreckung aufweisenden Bereich mit Mitteln zum drehfesten An: schluß der Torsionsfeder an gegeneinander verdrehbare Bauteile verbunden sind.

Insoweit sieht eine weitere Ausgestaltung der Erfindung vor, daß die vom jeweiligen Umlenkbereich abgewandten Enden der aus faserverstärktem Kunststoff bestehenden Rohrabschnitte mit metallischen Flanschen als Mittel zum Anschließen an gegeneinander verdrehbare Bauteile durch Klebung verbunden sind und daß die Flanschen und die Rohrabschnitte einander axial überlappende und sich zumindest über Teilbereiche des jeweiligen Umfangs erstreckende Kontaktflächen haben.

Bei einer derartigen Ausbildung der Verbindungsbereiche lassen sich die Axialerstreckungen der Kontaktflächen kleinhalten, gleichwohl aber hinreichend große Klebeflächen verwirklichen, die eine den bestimmungsgemäßen Anforderungen genügende Torsionsfestigkeit vermitteln.

Eine Weiterbildung der zuletztgenannten Ausgestaltung sieht vor, daß die Kontaktflächen der Flanschen aus in diesen umlaufenden Nuten bestehen und daß die Enden der Rohrabschnitte der Form der Nuten angepaßt sind sowie in letztere eingreifen. Wenn die inneren und äußeren Rohrabschnitte jeweils aus mehreren einander konzentrisch umschließenden Faserschichten bestehen, können entsprechend der Anzahl der Faserschichten einander konzentrisch umschließende Nuten vorgesehen und jede der Faserschichten mit einer der Form der Nuten entsprechenden Anschärfung ausgerüstet sein, die dann in die jeweiligen Nuten eingreifen und mit diesen fest verklebt sind.

Eine nochmalige Vergrößerung der Klebeflächen kann auch in der Weise verwirklicht werden, daß die Kontaktflächen der Flanschen und der damit mittels Klebung verbundenen Enden der Rohrabschnitte in axialer Richtung über den jeweiligen Umfang profiliert sind. Neben der Vergrößerung der Klebeflächen gewährleisten derartige Profilierungen der Kontaktflächen der Flanschen einerseits und der Rohrabschnitte andererseits eine zumindest teilweise formschlüssig wirkende Verbindung.

Anhand der beigefügten Zeichnungen sollen nachstehend einige Ausführungsbeispiele der Erfindung erläutert werden. In schematischen Ansichten zeigen:

Fig. 1 eine aus einem Innenrohr und einem dieses mit Spiel konzentrisch umschließenden Außenrohr bestehende Torsionsfeder für sich allein in einer Längsschnittansicht,

Fig. 2 den bestimmungsgemäßen Einsatz der Torsionsfeder nach Fig. 1 als Drehstabfeder für eine Gleisketten-Laufrolle, die am freien Ende eines mittels eines Lagerzapfens in einem fahrzeugfesten Lager drehbar angelenkten Schwingarms geführt ist,

Fig. 3 in einer gegenüber den Fig. 1 und 2 vergrößerten Halbschnittansicht eine Torsionsfeder, deren innere und äußere Rohrabschnitte aus mehreren einander konzentrisch umschließen und jeweils über einen Umlenkabschnitt miteinander verbundenen Faserschichten bestehen,

Fig. 4 in einer Ansicht wie in Fig. 3 den Aufbau einer derartigen Faserschicht aus schraubengangartigen Sektorstreifen, die einander zu Zylinderformen ergänzen und den inneren und äußeren Rohrabschnitt bilden,

Fig. 5 einen Sektorstreifen mit je einem über einen Umlenkabschnitt miteinander verbundenen Innen- und Außenteil,

Fig. 6 die Verbindung eines Rohrabschnittes der Torsionsfeder mit einem metallischen Flansch in einer Halbschnittansicht in der oberen Hälfte und einer nicht geschnittenen Ansicht in der unteren Hälfte und

Fig. 7 in einem - vergrößerten - Ausschnitt gemäß VII aus Fig. 6 die Kontaktflächen des Flanschs und des Rohrabschnittes vor dem Zusammenfügen.

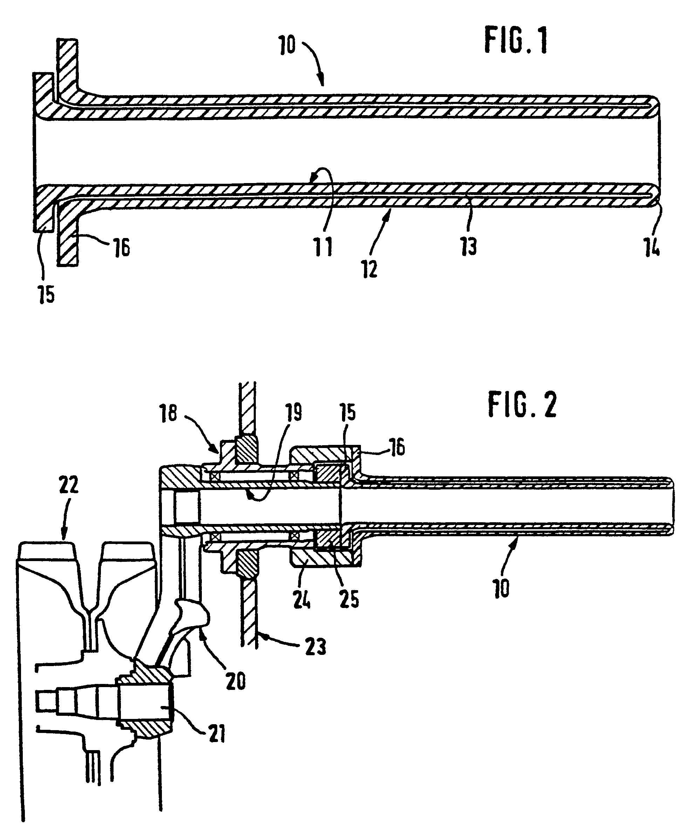

Bei der in Fig. 1 veranschaulichten Ausführungsform handelt es sich um eine Torsionsfeder 10 aus glasfaserverstärktem Kunststoff mit einem Innen- und einem Außenrohr 11, 12 die koaxial zueinander angeordnet einander unter Ausbildung eines Ringspaltes 13 umschließen. Die Torsionsfeder ist einstückig ausgebildet, indem das Innen- und Außenrohr über einen diese drehfest miteinander verbindenden Umlenkbereich 14 direkt ineinander übergehen. Es handelt sich mithin um eine Reihenschaltung der die beiden Drehfedern bildenden Rohrabschnitte, deren Gesamtfederkonstante kleiner ist als die beiden Einzelfederkonstanten. Die von dem Umlenkbereich 14 entfernten freien Enden der Rohrabschnitte sind mit sich radial erstreckenden und mit axialem Spiel direkt benachbart angeordneten Anschlußflanschen 15, 16 ausgerüstet. Der Anschlußflansch 16 des Außenrohrs 12 befindet sich auf der zum Umlenkbereich hinweisenden Seite des Innenrohrflanschs 15 und ragt radial über diesen hinaus.

Bei dem Anwendungsbeispiel nach Fig. 2 ist mittels eines in einem fahrzeugfesten Lager 18 drehbar aufgenommenen Lagerzapfens 19 ein Schwingarm 20 gelagert, der an seinem vom Lagerzapfen entfernten Ende in hier nicht weiter interessierender Weise eine auf einem Lagerzapfen 21 drehbar aufgenommene Gleisketten-Laufrolle 22 führt. Das Lager 18 ist in der in der Zeichnung nur schematisch angedeuteten Weise fest in beispielsweise der Bodenwanne 23 eines ansonsten nicht dargestellten Gleisketten-Fahrzeugs angeordnet. Auf der von dem Schwingarm 20 entfernten Seite ist mit dem Lager 18 drehfest ein Lagerring 24 verbunden, der sich axial über das eigentliche Lager hinauserstreckt und an den der Anschlußflansch 16 des Außenrohrs 12 der Torsionsfeder 10 drehfest angeschlossen ist. Auf der vom Schwingarm 20 abgewandten Seite des sich durch das Lager 18 hindurch erstreckenden Lagerzapfens 19 ist ein innerhalb des axial über das Lager 18 vorstehenden Abschnittes des Lagerringes 24 aufgenommener Stützring 25 drehfest angeordnet und mit diesem Stützring ist der Anschlußflansch 15 des Innenrohrs 11 der Torsionsfeder 10 drehfest verbunden.

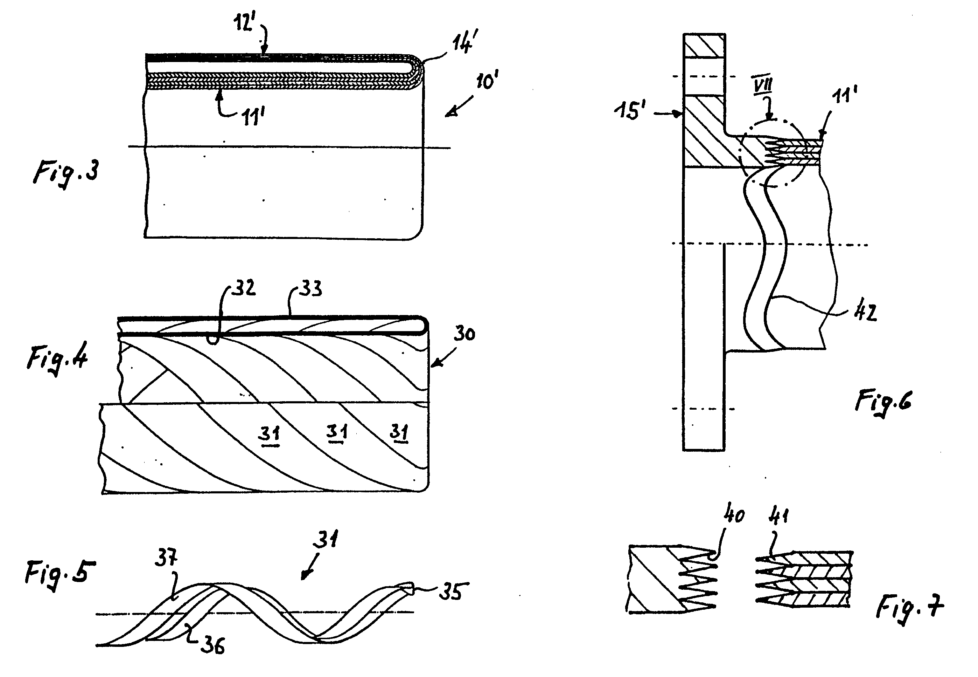

Bei der Ausführungsform nach Fig. 3 bestehen die inneren und äußeren Rohrabschnitte 11', 12' der Torsionsfeder 10' aus je vier einander konzentrisch umschließenden und fest miteinander verklebten Faserschichten. Die dem jeweils inneren und äußeren Rohrabschnitt zugeordneten Teile einer jeden Faserschicht' gehen in Umlenkabschnitten kontinuierlich ineinander über und die Umlenkabschnitte der vier Faserschichten bilden einen Umlenkbereich 14', der einen kontinuierlichen Übergang vom inneren Rohrabschnitt zum äußeren Rohrabschnitt vermittelt.

Fig. 4 zeigt den Aufbau einer Faserschicht 30 aus mehreren einander spiralförmig zugeordneten Sektorstreifen 31, die einander zu zwei über einen Umlenkabschnitt miteinander verbindenden koaxialen Zylindern 32, 33 ergänzen. Ein derartiger Sektorstreifen ist in Fig. 5 veranschaulicht. Es handelt sich dabei um vorfabrizierte Teile mit einem über einen Umlenkabschnitt 35 miteinander verbundenen Innen- und Außenteil 36, 37 jeweils gleichbleibender, untereinander aber unterschiedlicher Breitenerstreckung. In dem Innen- und Außenteil des Sektorstreifens 31 verlaufen parallel zueinander und parallel zu den jeweiligen Außenkanten Fasereinlagen, die über den Umlenkabschnitt 35 hinaus durchlaufend ausgebildet sind.

Kennzeichnend für diese Sektorstreifen ist, daß sowohl das Innenteil 36 wie auch das Außenteil 37 schraubengangförmig verlaufen, wobei jedoch die Schraubenrichtung sich im Umlenkabschnitt 35 umkehrt, so daß die Schraubenrichtung des Außenteils 37 gegenläufig zur Schraubenrichtung des Innenteils 36 verläuft.

Bei der Ausführungsform nach Fig. 4 haben die Innenund Außenteile der Sektorstreifen 31 gleiche Dicke. Wenn aus mehreren derartigen Faserschichten in der aus Fig. 3 ersichtlichen Weise eine Torsionsfeder aufgebaut wird, führt dies zu gleichen Wandstärken des inneren und äußeren Rohrabschnittes sowie dazu, daß die Steigungswinkel der einander schraubengangartig zugeordneten Innen- und Außenteile 36, 37 der Sektorstreifen 31 entsprechend unterschiedlich sein müssen. Dies ergibt sich aus den unterschiedlichen Durchmessern.

Bei der in Fig. 3 veranschaulichten Ausführungsform haben hingegen die Außenteile 37 der die einzelnen Faserschichten bildenden Sektorstreifen 31 eine geringere Dicke als die den inneren Rohrabschnitt 11' bildenden Innenteile 36. Die Anordnung kann zweckmäßigerweise so getroffen sein, daß die Außenteile 37 der die einzelnen Faserschichten bildenden Sektorstreifen 31 derart größere Breite als deren Innenteile 36 haben, daß die Innen- und Außenzylinder unter jeweils gleichen Steigungswinkeln gewickelt sind. Bei einer derartigen Ausgestaltung gelingt es auch in einfacher Weise, die Dicke der Innen- und Außenteile 36, 37 der Sektorstreifen 31 so zu bemessen, daß die Rohrabschnitte 11', 12' einer aus mehreren Faserschichten bestehenden Torsionsfeder 10' gleiche Torsionswiderstandsmomente haben.

Zweckmäßigerweise sind die jeweils benachbarten Faserschichten des inneren und äußeren Rohrabschnittes 11', 12' gegenläufig spiralförmig gewickelt.

Aus Fig. 6 ist die Verbindung des vom Umlenkbereich 14' entfernten Endes des inneren Rohrabschnittes 11' der Torsionsfeder 10' nach Fig. 3 mit einem metallischen Flansch 15' bei. Weglassung des äußeren Rohrabschnittes und eines damit in entsprechender Weise verbundenen metallischen Flanschs ersichtlich. Bei den Kontaktflächen des Flanschs handelt es sich um entsprechend der Anzahl der Faserschichten einander konzentrisch umschließende V-Nuten 40 und die Faserschichten greifen mit der Nutenform entsprechenden Anschärfungen 41 in die Nuten ein und sind mit diesen verklebt. Die Form der Nuten 40 des Flanschs und der Anschärfungen 41 der Faserschichten des Rohrabschnitts veranschaulicht insbesondere Fig. 7.

Die vorstehend erläuterte Ausbildung der Kontaktflächen des Flanschs und der Faserschichten vermittelt eine axiale Überlappung und damit eine Vergrößerung der Klebeflächen. Darüber hinaus weisen die Nuten 40 und entsprechend die Anschärfungen 41 an den vom Umlenkbereich entfernten Enden der Faserschichten einander angepaßte wellenförmige axiale Profilierungen auf, die bei 42 angedeutet sind und neben einer weiteren Vergrößerung der Klebeflächen auch eine formschlüssig wirkende Verbindung zwischen dem Flansch und dem Rohrabschnitt herstellen.

Die in der Zeichnung veranschaulichten Ausführungsformen und insbesondere das Anwendungsbeispiel gemäß Fig. 2 zeigen, daß angesichts der baulichen Gestaltung der Torsionsfeder aus zwei koaxial zueinander angeordneten und über einen Umlenkbereich einstückig miteinander verbundenen Rohrabschnitten eine im Vergleich zu bekannten Torsionsfeder beträchtliche Reduzierung der Baulänge verwirklicht ist. Die inneren und äußeren Rohrabschnitte und der einen kontinuierlichen Übergang zwischen diesen vermittelnde Umlenkbereich sind als wirksame Drehfedern genutzt. Die Torsionsmomente werden in unmittelbarer Nähe der Federeinspannung in die Torsionsfeder eingeleitet. Dadurch ist eine kurze und leicht bauende Torsionsfeder geschaffen worden, die einfach einbaubar ist und im Verhältnis zu ihrer Längenerstreckung große Federwege ermöglicht.

## Patentansprüche

1. Torsionsfeder (10) zum beidendig drehfesten Verbinden mit gegeneinander verdrehbaren Bauteilen, bei der wenigstens zwei koaxial zueinander angeordnete dünnwandige Rohrabschnitte (11, 12) einander mit Spiel konzentrisch umschließen, die an ihren einen Enden (14) drehfest miteinander verbunden und dadurch als Drehfeder in Reihe geschaltet, hingegen an den anderen Enden (15, 16) jeweils mit Mitteln zum drehfesten Anschluß an die gegeneinander verdrehbaren Bauteile versehen sind, insbesondere Drehstabfeder für einen in einem fahrzeugfesten Lager schwenkbar gelagerten Lenker zum Führen eines Fahrzeugrades bzw. einer Gleisketten-Laufrolle an seinem von dem Lager entfernten Ende, dadurch gekennzeichnet, daß die Rohrabschnitte (11, 12) einstückig ausgebildet sind und daß der Übergang von dem einen Rohrabschnitt zum anderen Rohrabschnitt in einem Umlenkbereich (14) im wesentlichen querschnittsgleich mit den ineinander übergehenden Rohrabschnitten kontinuierlich verläuft.

2. Torsionsfeder nach Anspruch 1, dadurch gekennzeichnet, daß die als Drehfeder in Reihe geschalteten Rohrabschnitte (11, 12; 11', 12') aus faserverstärktem Kunststoff bestehen.

3. Torsionsfeder nach Anspruch 2, dadurch gekennzeichnet, daß die Rohrabschnitte (11, 12; 11', 12') als Drehfedern mit in einem Winkel von etwa 45° gegenüber der Rohrlängsachse verlaufenden Fasereinlagen ausgebildet sind.

4. Torsionsfeder nach Anspruch 2 oder 3, dadurch gekennzeichnet, daß die verstärkenden Fasern im Umlenkbereich (14, 14') von dem einen Rohrabschnitt (11, 12; 11', 12') zum anderen Rohrabschnitt durchlaufend ausgebildet sind.

5. Torsionsfeder nach Anspruch 4, dadurch gekennzeichnet, daß die verstärkenden Fasern über den jeweiligen Rohrabschnitt (11, 12; 11', 12') schraubengangartig verlaufen und daß sich das Vorzeichen der Schraubenrichtung beim Übergang von dem einen in den anderen Rohrabschnitt im Umlenkbereich umkehrt.

6. Torsionsfeder nach einem der Ansprüche 2 bis 5, dadurch gekennzeichnet, daß die inneren und äußeren Rohrabschnitte (11', 12') unterschiedliche Wandstärken, jedoch etwa gleiche Torsionswiderstandsmomente haben.

7. Torsionsfeder nach einem der Ansprüche 2 bis 6, gekennzeichnet durch den Aufbau aus wenigstens zwei einander konzentrisch umschließenden, jeweils spiralförmig gewickelten Faserschichten (30).

8. Torsionsfeder nach Anspruch 7, dadurch gekennzeichnet, daß jede Faserschicht (30) aus mehreren vorfabrizierten schraubengangartigen Sektorstreifen (31) mit jeweils einem über einen Umlenkabschnitt (35) miteinander verbundenen Innen- und Außenteil (36, 37) besteht, die einander zu einem jeweils den inneren und äußeren Rohrabschnitt einer Faserschicht bildenden Zylinder (32, 33). ergänzen.

9. Torsionsfeder nach Anspruch 8, dadurch gekennzeichnet, daß die breite des Innen- und Außenteils (36, 37) eines jeden Sektorstreifens (31) jeweils über dessen axiale Länge gleichbleibend ist.

10. Torsionsfeder nach Anspruch 9, dadurch gekennzeichnet, daß die Außenteile (37) der schraubengangartigen Sektorstreifen (31) größere Breite als die Innenteile (36) haben.

11. Torsionsfeder nach Anspruch 9 oder 10, dadurch gekennzeichnet, daß die verstärkenden Fasern in den schraubengangartig ausgebildeten Sektorstreifen (31) parallel zueinander und parallel zu den Außenkanten der jeweiligen Innen- und Außenteile (36, 37) verlaufen.

12. Torsionsfeder nach einem der Ansprüche 8 bis 11, dadurch gekennzeichnet, daß einander umschließende Faserschichten (30) jeweils im entgegengesetzten Drehsinn gewickelt sind.

13. Torsionsfeder nach einem der Ansprüche 7 bis 12, dadurch gekennzeichnet, daß die einander umschließenden Faserschichten unterschiedlich dicht.gewickelt sind.

14. Torsionsfeder nach einem der Ansprüche 8 bis 13, dadurch gekennzeichnet, daß die Innen- und Außenteile (36, 37) der Sektorstreifen (31) bei der Bildung der inneren und äußeren Rohrabschnitte (11', 12') mit unterschiedlichen Schraubenwinkeln gewickelt sind.

15. Torsionsfeder nach einem der Ansprüche 2 bis 14, dadurch gekennzeichnet, daß die vom jeweiligen Umlenkbereich (14, 14') abgewandten Enden der aus faserverstärktem Kunststoff bestehenden Rohrabschnitte (11, 12; 11', 12') mit metallischen Flanschen als Mittel zum Anschließen an gegeneinander verdrehbare Bauteile durch Klebung verbunden sind und daß die Flanschen und die Rohrabschnitte einander axial überlappende und sich zumindest über Teilbereiche des jeweiligen Umfangs erstreckende Kontaktflächen (40, 41) haben.

16. Torsionsfeder nach Anspruch 15, dadurch gekennzeichnet, daß die Kontaktflächen der Flanschen aus in diesen umlaufenden Nuten (40) bestehen und daß die Enden der Rohrabschnitte mit der Form der Nuten angepaßten Anschärfungen (41) versehen sind und damit in die Nuten eingreifen.

17. Torsionsfeder nach Anspruch 15 oder 16, dadurch gekennzeichnet, daß die Kontaktflächen (40, 41) der Flanschen und der damit mittels Klebung verbundenen Enden der Rohrabschnitte in axialer Richtung über den jeweiligen Umfang profiliert sind.

## Claims

1. Torsion spring (10) for rotationally fast connection at both ends with components rotatable relative to one another, in which at least two thin-walled pipe sections (11, 12) are arranged coaxially with one another and concentrically surround one another with play, which are connected rotationally fast with one another at their one ends (14) and thereby are connected in series as torsion spring and on the other hand are provided at the other ends (15, 16) each time with means for rotationally fast connection to the components rotatable relative to one another, especially torsion bar spring for an arm, which is pivotally mounted in a bearing fixed in a vehicle, for guiding of a vehicle wheel or of a caterpillar track wheel at its end remote from the bearing, characterised thereby that the pipe sections (11, 12) are constructed in one piece and that the transition from one pipe section to the other pipe section in a turn-round region (14) proceeds continuously in substantially uniform cross-section with the pipe sections changing into one another.

2. Torsion spring according to claim 1, characterised thereby that the pipe sections (11, 12; 11', 12') connected in series as torsion spring consist of fibre-reinforced synthetic material.

3. Torsion spring according to claim 2, characterised thereby that the pipe sections (11, 12; 11', 12') are constructed as torsion spring with fibre inserts running at an angle of approximately 45° relative to the pipe longitudinal axis.

4. Torsion spring according to claim 2 or 3, characterised thereby that the reinforced fibres are constructed in the turn-round region (14, 14') to continue from the one pipe section (11, 12; 11', 12') to the other pipe section.

5. Torsion spring according to claim 4, characterised thereby that the reinforced fibres run screwthread-like over the respective pipe section (11, 12;, 11', 12') and that the sense of the screw direction reverses at the transition from the one to the other pipe section in the turn-round region.

6. Torsion spring according to one of claims 2 to 5, characterised thereby that the inner and outer pipe sections (11', 12') have different wall strengths but approximately equal moments of torsional resistance.

7. Torsion spring according to one of claims 2 to 6, characterised by the build-up from at least two fibre layers (30) concentrically surrounding one another and each spirally wound.

8. Torsion spring according to claim 7, characterised thereby that each fibre layer (30) consists of several prefabricated screwthread-like sector strips (31) each with an inner and an outer part (36, 37) connected with one another by way of a turn-round section (35), which inner and outer parts together make up each time a cylinder (32, 33) forming the inner and outer pipe section of a fibre layer.

9. Torsion spring according to claim 8, characterised thereby that the width of the inner and outer part (36, 37) of a respective sector strip (31) is each time constant over the axial length thereof.

10. Torsion spring according to claim 9, characterised thereby that the outer parts (37) of the screwthread-like sector strips (31) have greater width than the inner parts (36).

11. Torsion spring according to claim 9 or 10, characterised thereby that the reinforced fibres run, in the sector strips (31) constructed screwthread-like, parallel to one another and parallel to the outer edges of the respective inner and outer parts (36, 37).

12. Torsion spring according to one of claims 8 to 11, characterised thereby that fibre layers (30) surrounding one another are each time wound in opposite rotational sense.

13. Torsion spring according to one of claims 7 to 12, characterised thereby that the fibre layers surrounding one another are wound with different thickness.

14. Torsion spring according to claim 8 to 13, characterised thereby that the inner and outer parts (36, 37) of the sector strips (31) are wound with different screw angles in the of forming of the inner and outer pipe sections (11', 12').

15. Torsion spring according to one of claims 2 to 14, characterised thereby that the ends, remote from the respective turn-round region (14, 14'), of the pipe sections (11, 12; 11', 12') consisting of fibre-reinforced synthetic material are connected with metallic flanges as means for the connection by gluing to components rotatable relative to one another and that the flanges and the pipe sections have contact surfaces (40, 41) axially overlapping one another and extending at least over partial regions of the respective circumference.

16. Torsion spring according to claim 15, characterised thereby that the contact surfaces of the flanges consist of grooves (40) extending around in these and that the ends of the pipe sections are provided with sharpenings matched to the shape of the grooves and thus engaged in the grooves.

17. Torsion spring according to claim 15 or 16, characterised thereby that the contact surfaces (40, 41) of the flanges and the ends of the pipe sections connected therewith by gluing are profiled in axial direction over the respective circumference.

**Revendications**

1. Ressort de torsion (10), destiné à être relié en ses deux extrémités, d'une manière rigide en torsion, à des éléments de construction pouvant subir une torsion les uns par rapport aux autres, ressort dans lequel au moins deux tronçons de tube (11, 12), à mince épaisseur de paroi, coaxiaux l'un par rapport à l'autre, s'entourent les uns les autres d'une manière concentrique et avec jeu, tronçons qui, en l'une de leurs extrémités (14), sont liés l'un à l'autre d'une manière rigide en torsion et de ce fait sont montés en série sous forme de ressorts de torsion, tandis que, en l'autre extrémité (15, 16), ils sont chacun pourvus d'organes permettant un raccordement rigide en torsion aux éléments de construction pouvant subir une torsion les uns par rapport aux autres, notamment ressort à barre de torsion destiné à un bras oscillant, logé en pivotement dans un palier solidaire d'un véhicule, ce bras étant destiné à guider une roue de véhicule ou un galet de chenille en son extrémité opposée au palier, caractérisé en ce que les tronçons de tube (11, 12) sont conçus d'une seule pièce, et que la transition de l'un des tronçons de tube à l'autre tronçon de tube est réalisée d'une manière continue dans une zone de renvoi (14), ayant une section transversale essentiellement identique à celle des tronçons de tube qui passent l'un dans l'autre.

2. Ressort de torsion selon la revendication 1, caractérisé en ce que les tronçons de tube (11, 12 ; 11', 12'), montés en série sous forme de ressorts de torsion, sont constitués d'un plastique renforcé par des fibres.

3. Ressort de torsion selon la revendication 2, caractérisé en ce que les tronçons de tube (11, 12 ; 11', 12') sont conçus comme des ressorts de torsion, avec des insertions fibreuses courant selon un angle d'environ 45° par rapport à l'axe longitudinal des tubes.

4. Ressort de torsion selon la revendication 2 ou 3, caractérisé en ce que les fibres de renforcement sont réalisées d'une manière continue dans la zone de renvoi (14, 14') entre un tronçon de tube (11, 12 ; 11', 12') et l'autre tronçon de tube.

5. Ressort de torsion selon la revendication 4, caractérisé en ce que les fibres de renforcement courent en pas de vis sur le tronçon de tube correspondant (11, 12 ; 11', 12'), et que le signe du sens du filetage s'inverse lors de la transition de l'un des tronçons de tube à l'autre tronçon de tube dans la zone de renvoi.

6. Ressort de torsion selon l'une des revendications 2 à 5, caractérisé en ce que les tronçons de tube intérieur et extérieur (11', 12') ont des épaisseurs de paroi différentes mais des moments de résistance à la torsion approximativement égaux.

7. Ressort de torsion selon l'une des revendications 2 à 6, caractérisé par la mise en place d'au moins deux couches fibreuses (30), s'entourant l'une l'autre d'une manière concentrique, et chacune enroulée en spirale.

8. Ressort de torsion selon la revendication 7, caractérisé en ce que chaque couche fibreuse (30) est constituée de plusieurs bandes à secteurs (31), en pas de vis, préfabriquées, ayant chacune une partie intérieure et une partie extérieure (36, 37), liées l'une à l'autre par l'intermédiaire d'un tronçon de renvoi (35), parties qui se complètent l'une l'autre pour donner un cylindre (32, 33), qui forme le tronçon intérieur et le tronçon extérieur d'une couche fibreuse.

9. Ressort de torsion selon la revendication 8, caractérisé en ce que la largeur de la partie intérieure et de la partie extérieure (36, 37) de chaque bande à secteurs (31) est identique sur toute sa longueur axiale.

10. Ressort de torsion selon la revendication 9, caractérisé en ce que les parties extérieures (37) des bandes à secteurs (31) en pas de vis ont une largeur supérieure à celle des parties intérieures (36).

11. Ressort de torsion selon la revendication 9 ou 10, caractérisé en ce que les fibres de renforcement courent, dans les bandes à secteurs (31) en pas de vis, parallèlement les unes aux autres est parallèlement aux bords extérieurs des différentes parties intérieures et extérieures (36, 37).

12. Ressort de torsion selon l'une des revendications 8 à 11, caractérisé en ce que les couches fibreuses (30), qui s'entourent les unes des autres, sont toutes enroulées selon des sens de rotation différents.

13. Ressort de torsion selon l'une des revendications 7 à 12, caractérisé en ce que les couches fibreuses qui s'entourent les unes les autres présentent des densités d'enroulement différentes.

14. Ressort de torsion selon l'une des revendications 8 à 13, caractérisé en ce que les parties intérieures et extérieures (36, 37) des bandes à secteurs (31) sont, lors de la formation des tronçons de tube intérieurs et extérieurs (11', 12'), enroulées avec des angles d'inclinaison différents.

15. Ressort de torsion selon l'une des revendications 2 à 14, caractérisé en ce que les extrémités, opposées à la zone de renvoi (14, 14') des tronçons de tube (11, 12 ; 11', 12') constitués d'un plastique renforcé par des fibres, sont liées par collage à des brides métalliques servant d'organes pour le raccordement à des éléments de construction pouvant subir une torsion les uns par rapport aux autres, et que les brides et les tronçons de tube comportent des surfaces de contact (40, 41), à chevauchement axial et qui s'étendent au moins sur des zones partielles de leur périphérie.

16. Ressort de torsion selon la revendication 15, caractérisé en ce que les surfaces de contact des brides sont constituées de rainures (40) périphériques aménagées dans ces dernières, et que les extrémités des tronçons de tube sont pourvues d'affûtements (41) de forme adaptée à celle des rainures, et de ce fait engrènent dans les rainures.

17. Ressort de torsion selon la revendication 15 ou 16, caractérisé en ce que les surfaces de contact (40, 41) des brides et des extrémités, qui leur sont liées par collage, des tronçons de tube, sont profilées en direction axiale sur leur périphérie.

FIG.1

FIG. 2

Fig.3

Fig.4

Fig.5

Fig.6

Fig.7

12'

14'

11'

10'

32    33

30

31    31    31

37

31

35

36

15'

VII

11'

42

40    41

EP 0 378 607 B1